# NEUE EUROPÄISCHE PATENTSCHRIFT

(11) **EP 0 918 805 B2**
(45) Veröffentlichungstag und Bekanntmachung des Hinweises auf die Entscheidung über den Einspruch: **22.08.2007**
(45) Hinweis auf die Patenterteilung: 12.06.2002
(21) Anmeldenummer: 97941943.9
(22) Anmeldetag: 18.08.1997
(51) Int. Cl.: C08F 12/08, C08F 36/00, C08F 4/44

(54) **VERFAHREN ZUR ANIONISCHEN POLYMERISATION**
ANIONIC POLYMERISATION PROCESS
PROCEDE DE POLYMERISATION ANIONIQUE

(30) Priorität: 19.08.1996 DE 19633272; 19.08.1996 DE 19633273; 11.04.1997 DE 19715036; 22.07.1997 DE 19731419
(43) Veröffentlichungstag der Anmeldung: 02.06.1999
(73) Patentinhaber: BASF Aktiengesellschaft, 67056 Ludwigshafen (DE)
(72) Erfinder: FISCHER, Wolfgang, D-69190 Waldorf (DE); GAUSEPOHL, Hermann, D-67112 Mutterstadt (DE); KNOLL, Konrad, D-67069 Ludwigshafen (DE); LÄTSCH, Stefan, D-67098 Bad Dürkheim (DE); LOTH, Wolfgang, D-67098 Bad Dürkheim (DE); SCHADE, Christian, D-67061 Ludwigshafen (DE); WARZELHAN, Volker, D-67273 Weisenheim (DE); FONTANILLE, Michel, F-33400 Talence (FR); DEFFIEUX, Alain, F-33402 Talence Cedex (FR); DESBOIS, Philippe, F-33800 Bordeaux (FR)
(86) Internationale Anmeldenummer: PCT/EP1997/004497
(87) Internationale Veröffentlichungsnummer: WO 1998/007765

(56) Entgegenhaltungen:
- EP-A- 0 595 119
- DE-A- 2 263 104
- DE-B- 1 272 548
- DE-B- 1 292 848
- US-A- 4 894 409
- Macromolecules, Vol. 19, No. 2, 1986, S. 299-304, Hsieh et al.

## Beschreibung

Die Erfindung betrifft ein Verfahren zur Herstellung von Styrol- polymeren sowie Styrol-Dien-Blockcopolymeren durch kontinuierliche anionische Polymerisation der entsprechenden Monomeren mit Alkalimetallalkyl als Polymerisationsauslöser, das sich durch besonders wirtschaftlichen und sicheren Betrieb auszeichnet.

Es ist allgemein bekannt, daß die anionische Polymerisation zwar vollständig, d.h. bis zum vollständigen Umsatz, aber auch sehr schnell verläuft. Die Umsatzgeschwindigkeit könnte, abgesehen von der Wahl einer moglichst niedrigen Temperatur, nur dadurch verringert werden, daß die Konzentration des Polymerisacionsauslösers geringer gewählt wird; auf diese Weise würden aber nur wenige, sehr lange Kettenmoleküle gebildet werden, d.h. man würde ein unerwünscht hohes Molgewicht erhalten. Wegen der beträchtlichen Wärmeentwicklung und der Schwierigkeit, die Wärme aus einer viskosen Lösung abzuführen, ist die Begrenzung der Umsetzungstemperatur wenig wirkungsvoll.

Eine zu hohe Reaktionstemperatur hat vor allem bei der Blockcopolymerisation besonders nachteilige Folgen, weil durch thermischen Abbruch die Bildung einheitlicher Blockcopolymerer gestört wird und, falls nach der Polymerisation eine Kopplungsreaktion beabsichtigt ist, die sog. Kopplungsausbeute ungünstig niedrig ware.

Somit muß die Temperatur durch entsprechende Verdünnung der Monomeren beherrscht werden, wodurch aber der Bedarf an Reaktionsraum unnötig groß wird, d.h. die anionische Polymerisation läßt sich trotz der erreichbaren hohen Reaktionsgeschwindigkeit nur mit verhältnismäßig geringer Raumzeitausbeute betreiben.

Bei absatzweiser Polymerisation (d.h. in einem Rührkessel) könnte die Temperatur auch über die Zulaufgeschwindigkeit des Monomeren geregelt werden. Dies ist aber bei einem kontinuierlich durchgeführten Verfahren ohne gleichzeitige Veränderung sonstiger Parameter kaum möglich.

Man hat sich bisher damit begnügt, in den Fällen, wo auf die anionische Polymerisation nicht verzichtet werden kann, d.h. bei der Block-Copolymerisation, die Umsetzung trotz der Unbeliebtheit des absatzweisen Verfahrens im Rührkessel vorzunehmen, wie es beispielsweise in den deutschen Patentschriften 13 01 496 und 25 50 227 beschrieben ist und die Umsetzungsgeschwindigkeit durch eine Regelung des Zulaufs an frischem Monomeren einzustellen. Eine wesentliche Störungsmöglichkeit ist dabei der unfreiwillige Kettenabbruch durch geringste Verunreinigungen, der zur Folge hat, daß die gewünschte Struktur nicht erreicht wird. Wenn man z.B. Dreiblock-Copolymere herstellen will, erhält man Mischungen mit einem Anteil an Zweiblock-Copolymeren oder Homopolymeren statt des reinen Produkts, die z.B. eine geringere Reißfestigkeit aufweisen.

Bei den beschriebenen Verfahren werden überdies nur verdünnte Polymerlösungen hergestellt, weil Lösungen mit hohem Feststoffgehalt im Rührkessel keine gute Wärmeabfuhr ermöglichen und sich auch sonst schlecht handhaben lassen, z.B. beim Austrag des fertigen Produkts aus dem Reaktionsraum.

Die kontinuierliche anionische Polymerisation ist in neuerer Zeit unter anderem von Priddy und Pirc (J. Appl. Polym. Sci.; 37 (1989) 392 - 402) am Beispiel der kontinuierlichen Polymerisation von Styrol mit n-Butyl-Lithium in Ethylbenzol in einem kontinuierlich betriebenen Umlaufreaktor bei 90 bis 110°C untersucht worden. Die mittlere Verweilzeit liegt dabei oberhalb 1,5 Stunden. Die Autoren weisen dabei auch auf die Schwierigkeiten hin, die sich einstellen, wenn man die Polymerisation in Rohrreaktoren vornimmt, die wegen des Wärmeaustausches möglichst kleine Durchmesser aufweisen müssen. Dabei treten vor allem Ablagerungen von Polymeren sehr hohen Molgewichts an den Rohrwänden auf. Außerdem weisen die Autoren auf die bereits erwähnte Tatsache hin, daß Temperaturen oberhalb von 110°C zu thermischem Abbruch durch Li-H-Eliminierung führen.

Eine höhere Monomerkonzentration bzw. eine bessere Raumzeitausbeute soll nach einem in der europäischen Patentschrift 592 912 beschriebenen kontinuierlichen Verfahren in einem sog. SMR-Reaktor möglich sein, einem Rohrreaktor mit Einbauten, die die Quervermischung fördern. Allerdings verwenden die wiedergegebenen Beispiele ebenfalls nur relativ verdünnte Polymerlösungen; offensichtlich ist es auch bei Einsatz eines Rohrreaktors nicht möglich gewesen, die Reaktionswärme schnell genug abzuführen.

Zur Verringerung des Gehalts an Restmonomeren muß Polystyrol, das radikalisch nach dem kontinuierlichen Masse- bzw. Lösungspolymerisationsverfahren hergestellt worden ist - wie immer bei radikalischer Polymerisation - nachträglich mittels Extruder oder Dünnschichtverdampfer von Restmonomeren befreit ("entgast") werden. Aus thermodynamischen Gründen findet jedoch bei der in den Entgasungsapparaturen herrschenden hohen Temperatur Depolymerisation statt, sodaß der Restgehalt an Styrol in der Regel über 500 ppm liegt (Kunstscoff Handbuch Bd.4, Polystyrol, Karl Hanser-Verlag 1996, Seite 124).

Es ist bekannt, daß durch die anionische Polymerisation eine wesentlich niedrigere Konzentration an Restmonomeren erreichbar ist. Die anionischen Polymerisation liefert aber in der Regel eine für technische Polymere zu enge Molekulargewichtsverteilung, was zu einem niedrigen Schmelzflußindex und schlechterem Fließverhalten bei der Verarbeitung führt.

Über den Einfluß von Lewissäuren und Lewisbasen auf die Geschwindigkeit der anionischen Polymerisation von Styrol bei 30°C wurde von Welch in J.A.C.S. 82 (1960), 6000-6005 berichtet. So wurde gefunden, daß geringe Mengen von Lewis-Basen wie Ether und Amine die durch n-Butyllithium intiierte Polymerisation von Styrol beschleunigen, wohingegen geringe oder gar stöchiometrische Mengen von Lewis-Säuren wie Zink- und Aluminiumalkyl die Polymerisationsgeschwindigkeit herabsetzen bzw. gänzlich unterdrücken sollen. Hsieh und Wang untersuchen in Macromolecules 19 (1966), 299-304 die Komplexbildung etwa stöchiometrischer Mengen von Dibutylmagnesium mit Alkyllithium bzw. der lebenden Polymerkette in An- und Abwesenheit von THF und finden, daß Dibutylmagnesium die Polymerisationsgeschwindigkeit von Styrol und Butadien herabsetzt, ohne die Stereochemie zu beeinflussen.

Aus der US-Patentschrift 3,716,495 sind Initiatorzusammensetzungen für die Polymerisation von konjugierten Dienen und Vinylaromaten bekannt, bei denen eine effektivere Nutzung von Lithiumalkyl als Initiator durch den Zusatz vor. beispielsweise Diethylzink und polarer Verbindungen wie Ethern oder Aminen erreicht wird. Nach der genannten US-Patentschrift ist jedoch viel Lösungsmittel und eine Reaktionsdauer von mehreren Stunden notwendig und dementsprechend sind die Raum-Zeit-Ausbeuten entsprechend niedrig.

Die Erfindung löst die Aufgabe, ein kontinuierlich und insbesondere auch bei hoher Temperatur mit hoher Geschwindigkeit durchführbares Verfahren zur anionischen Polymerisation zu finden, das eine Kontrolle der Reaktionsgeschwindigkeit auch bei hoher Monomerkonzentration - in einigen Fällen sogar in lösungsmittelfreier Umgebung - erlaubt und sich deshalb durch besonders wirtschaftlichen Betrieb auszeichnet und das es ermöglicht, Polymere mit besonders niedrigem Restmonomerengehalt herzustellen.

Die Aufgabe wird erfindungsgemäß gelöst durch ein Verfahren zur Herstellung von Polystyrol, Styrol - Bestadien - Block copolymerisation oder schlagzähen Polystyrol durch kontinuierlichen anionischen Polymerisation oder Copolymerisation von Styrol- oder Dienmonomeren mit Alkalimetallalkyl oder -aryl A als Polymerisationsauslöser, wobei die Polymerisation in Gegenwart eines Metallalkyls oder -aryls B der Formel R²ₙM² als Geschwindigkeitsregler vorgenommen wird, wobei
- M²:: ein n-wertiges Element der Gruppe 2a oder 2b des Periodensystems oder Aluminium, ; und
- R²:: unabhängig voneinander Wasserstoff, Halogen, C₁-C₂₀-Alkyl oder C₆-C₂₀-Aryl
bedeuten, mit der Maßgabe, daß mindestens ein Rest R² C₁-C₂₀-Alkyl oder C₆-C₂₀-Aryl ist, und wobei als Lösungsmittel Toluol, Cyclohexan, Methylcyclohexan, Hexan, Heptan, Ethylbenzol oder Dekalin eingesetzt werden und die anfängliche Monomerkonzentration mindestens 50 Gew.-% beträgt.

Diese Metallalkyle bzw. -aryle mindestens zweiwertig auftretender Elemente werden nachstehend auch als Geschwindigkeitsregler oder Retarder bezeichnet.

Als Polymerisationsauslöser kann ein Alkalimetallalkyl bzw. -aryl A der Formel R¹M¹, wobei
- M¹:: Li, Na oder K;
- R¹:: C₁-C₂₀-Alkyl oder C₆-C₂₀-Aryl oder
C₇-C₂₀-alkylsubstituiertes Aryl
bedeuten oder
eine bezogen auf M¹ äquivalente Menge eines initiatorfähigen niedermolekularen Umsetzungsprodukts A' der Formel R³(M¹)ₓ des Alkalimetallalkyls bzw. -aryls A verwendet werden, wobei
- X: eine ganze Zahl von 2 bis 5 bedeutet und
- R³: den x-wertigen Rest eines aliphatischen, aromatisch-aliphatischen oder aromatischen Kohlenwasserstoffs darstellt.

Durch Zugabe des erfindungsgemäßen Geschwindigkeitsreglers (Retarders) läßt sich die Reaktionsgeschwindigkeit ohne Nachteile für die Polymereigenschaften soweit absenken bzw. die Temperatur soweit erhöhen, daß die freiwerdende Polymerisationswärme auch bei hoher Monomerkonzentration beherrscht werden kann und/oder eine hohe Raumzeitausbeute möglich ist.

In Gegenwart eines erfindungsgemäßen Geschwindigkeitsreglers sind Nebenreaktionen, die zur Deaktivierung der wachsenden Polymerkette führen können - wie z. B. Lithiumhydrid-Eliminierungen - verlangsamt, sodaß höhere Temperaturen als bei der Umsetzung in Abwesenheit dieser Verbindungen möglich sind. Die Durchführung der Reaktion bei höheren Temperaturen kann z. B. für die Handhabung höhermolekularer Produkte oder höherkonzentrierter Polymerlösungen notwendig sein.

Das erfindungsgemäße Verfahren kann auf die Polymerisation von Styrol, a-Methylstyrol, p-Methylstyrol, p-tert.-Butylstyrol, Ethylstyrol, Butadien, 2,3-Dimethylbutadien oder deren Mischungen angewandt werden. Bevorzugt werden Styrol, und Butadien, ganz besonders bevorzugt Styrol eingesetzt. Zweckmäßigerweise setzt man die Monomeren in der verfahrenstypisch erforderlichen Reinheit ein, beispielsweise, indem man das oder die Monomeren unmittelbar vor der Zufuhr zum Reaktionsraum von störenden Begleitstoffen (z. B. Restfeuchte, polare Stoffe oder Sauerstoff) befreit.

Das erfindungsgemäße Verfahren kann bei einer Temperatur deutlich oberhalb von 100°C ausgeübt werden, bei der sich auch Schmelzen oder konzentrierte Lösungen von Polymeren handhaben lassen. Bei Bedarf eignen sich als Lösungsmittel z.B. Cyclohexan, Methylcyclohexan, Hexan, Heptan, Toluol, Ethylbenzol, Dekalin, oder geeignete Gemische, wobei die anfängliche Monomerkonzentration mindestens 50 Gew.-% betragen sollte. Auch in den Fällen, bei denen eine gewisse Lösungsmittelmenge verwendet werden soll, kann die anfängliche Monomerkonzentration bis 90 Gew.-% betragen. Soweit Lösungsmittel verwendet werden, setzt man sie in der verfahrenstypisch erforderlichen Reinheit ein. Vorzugsweise wird das Lösungsmittel aus dem Verfahren nach Abtrennung vom Produkt und einer eventuellen Reinigung wiederverwendet.

Als Alkalimetallalkyl oder -aryl können die einschlägig bekannten Verbindungen insbesondere des Lithiums mit Alkyl-, Aryl- oder Alkylarylresten mit jeweils 1 bzw. 6 bzw. 7 bis 20 oder mehr C-Atomen verwendet werden. Es kann sich um monofunktionelle oder mehrfunktioneile Metallverbindungen handeln. Geeignete mehrfunktionelle Verbindungen sind beispielsweise in den US-Patentschriften 5,171,800 und 5,321,093 beschrieben. Ebenfalls geeignet sind, wie vorstehend bereits erwähnt, als Initiatoren auch initiatorfähige niedermolekulare Umsetzungsprodukte von Metallalkyl oder -aryl (z.B. Lithiumbutyl) mit z.B. vinylaromatischen oder vinylidenaromatischen Verbindungen (z.B. Diarylethyliden) geeignet, wie sie als Vorstufe der anionischen Polymerisation gebildet und bei entsprechend geringen Mengen an vinylaromatischer bzw. vinylidenaromatischer Verbindung in stabiler Form erhalten werden können. Zweckmäßigerweise werden lithiumorganische Verbindungen eingesetzt wie Ethyl-, Propyl-, Isopropyl-, n-Butyl-, s-Butyl-, t-Butyl-, Phenyl-, Hexyldiphenyl-, Butadienyl-, Polystyryllithium oder die mehrfunktionellen Verbindungen Hexamethylendilithium, 1,4-Dilithiobutan, 1,6-Dilithiohexan, 1,4-Dilithio-2-buten oder 1,4-Dilithiobenzol. Bevorzugt werden n-Butyl- und sec-Butyllithium eingesetzt. Die benötigte Initiatormenge liegt, je nach dem gewünschten mittleren Molekulargewicht, in der Regel im Bereich von 0,0001 bis 5 Molprozent, bezogen auf die Monomermenge.

Als Geschwindigkeitsregler wird eine Verbindung eines Elements der zweiten oder dritten Hauptgruppe oder der zweiten Nebengruppe des Periodensystems oder Aluminium eingesetzt. Aus praktischen Gründen setzt man vor allem Erdalkalimetall-, Zink- oder Aluminiumalkyl bzw. -aryl mit Alkyl- oder Arylresten mit jeweils 1 bzw. 6 bis 20 C-Atomen ein. Anstelle von Metallalkyl oder -aryl kann man ein Metallalkyl oder Metallarylhalogenid oder Metallalkyl oder Metallarylhydrid wie z.B. Diethyialuminiumchlorid oder Dibutylaluminiumhydrid einsetzen. Es können Verbindungen mit einheitlichen oder verschiedenen Resten oder Mischungen verschiedener Verbindungen verwendet werden. Bevorzugt werden Magnesiumalkyl, Aluminiumalkyl oder Zinkalkyl verwendet, insbesondere die als Handelsprodukte verfügbaren Methyl , Ethyl-, Propyl-, Butyl-, Hexyl-, Octyl- oder Dodecylverbindungen. Besonders bevorzugte Geschwindigkeitsregler sind Butylethylmagnesium, Dibutylmagnesium, Butyloctylmagnesium, Dihexylmagnesium, Diethylzink, Dibutylzink, Trimethylaluminium, Triethylaluminium, Triisobutylaluminium, Tri-n-hexylaluminium, Diisobutylaluminiumhydrid, Diethylaluminiumchlorid oder Mischungen dieser Verbindungen untereinander.

Der Geschwindigkeitsregler kann z.B. in einem Molverhältnis von 0,1:1 bis 500:1, bevorzugt 0,5:1 bis 100:1, insbesondere 0,8:1 bis 30:1, bezogen auf die Menge des Alkalimetallalkyls oder - aryls eingesetzt werden. Bei mehrfunktionellen Verbindungen bezieht sich diese Angabe natürlich auf ein Äquivalent der entsprechenden Metallverbindung.

Die verschiedenen Geschwindigkeitsregler werden zur Erzielung optimaler Ergebnisse in jeweils spezifischen Mengenverhältnissen eingesetzt. Z.B. wird als Initiator/Retarder-Verhältnis für Dibutylmagnesium ein Verhältnis von 1:0,1 bis 1:500, bevorzugt von 1:0,5 bis 1:200, insbesondere von 1:1 bis 1:50 eingesetzt. Trimethyl-, Triethyl- und Triisobutylaluminium und Diisobutylaluminiumhydrid werden bevorzugt mit einem Initiator/Retarder-Verhältnis von 1:0,1 bis 1:1 eingesetzt, besonders bevorzugt von 1:0,4 bis 1:0,99, insbesondere von 1:0,7 bis 1:0.98. Trihexylaluminium wird bevorzugt mit einem Initiator/Retarder-Verhältnis von 1:0,5 bis 1:500, besonders bevorzugt von 1:0,8 bis 1:100, insbesondere von 1:1 bis 1:30 eingesetzt.

Zur genauen Bestimmung des jeweiligen Retarder/Initiatorverhältnisses führt man zweckmäßig einen Vorversuch durch und richtet es durch Wahl der Menge an Retarder so ein, daß die gewünschte Reaktionstemperatur bzw. Umsatzgeschwindigkeit nicht überschritten wird.

Die erfindungsgemäßen Geschwindigkeitsregler wirken für sich nicht als Initiatoren. Sie können jedoch in Kombination mit den erfindungsgemäßen Alkalimetallverbindungen ebenfalls polymerisationsauslösend wirken. Zweckmäßigerweise führt man einen Vorversuch durch und richtet die Reaktionsbedingungen - z. B. die Art und Menge der metallorganischen Komponenten, die Monomerenkonzentration, das Retarder/Initiatorverhältnis, die Reaktionstemperatur, den Umsatz oder die Verweilzeiten - so ein, daß das gewünschte Molekulargewicht erhalten wird.

Nach erfolgtem Molekulargewichtsaufbau können die "lebenden" Polymerenden mit den für die anionische Polymerisation üblichen Kettanabbruch- oder Kopplungsmitteln umgesetzt werden. Als Kettenabbruchsmittel eignen sich protonenaktive Substanzen oder Lewis-Säuren wie beispielsweise Wasser, Alkohole, aliphatische und aromatische Carbonsäuren, Phenole sowie anorganische Säuren wie Kohlensäure und Borsäure oder Mischungen aus solchen Substanzen. Zur Kopplung der Polymere können mehrfunktionelle Verbindungen wie beispielsweise polyfunktionelle Aldehyde, Ketone, Ester, Zinn- oder Siliziumhalogenide, Anhydride oder Epoxyde eingesetzt werden, wodurch man Polymere mit doppeltem Molekulargewicht bzw. verzweigte oder sternförmige Polymerisate erhält.

Die Erfindung betrifft weiterhin einen besonders geeigneten Katalysator (Initiatormischung) zur Durchführung des erfindungsgemäßen Verfahrens. Eine solche Initiatormischung enthält ein Metallalkyl oder -aryl A der Formel R¹M¹ und ein Metallalkyl oder -aryl B der Formel R²ₙM² in einem molaren Verhältnis von B zu A von 10:1 bis 100:1, wobei
- M¹:: Li, Na oder K;
- R¹:: C₁-C₂₀-Alkyl oder C₆-C₂₀-Aryl, C₇-C₂₀-alkylsubstituiertes Aryl;
- M²:: ein n-wertiges Element der Gruppe 2a, 2b
des Periodensystems oder Aluminium und
- R²:: unabhängig voneinander Wasserstoff, Halogen, C₁-C₂₀-Alkyl oder C₆-C₂₀-Aryl
bedeuten, mit der Maßgabe, daß mindestens ein Rest R² C₁-C₂₀-Alkyl oder C₆-C₂₀-Aryl ist, dadurch gekennzeichnet, daß der Initiator keine Lewisbase enthält.

Anstelle eines Metallalkyls oder -aryl A der Formel R¹M¹ kann als Bestandteil A auch ein initiatorfähiges niedermolekulares Umsetzungsprodukt A' des Metallalkyls oder -aryls A mit der allgemeinen Formel R³(M¹)ₓ verwendet werden, wobei x eine ganze Zahl von 2 bis 5 bedeutet und R³ den x-wertigen Rest eines aliphatischen, aromatisch-aliphatischen oder aromatischen Kohlenwasserstoffs darstellt. Geeignete Produkte R³(M¹)ₓ bilden sich z.B. bei Umsetzung von geringen Mengen mehrfach vinylierter aromatischer Verbindungen mit Alkalimetallalkyl oder können unmittelbar durch Umsetzung von Alkalimetall mit Polyarylverbindungen erhalten werden. Mit diesen Umsetzungsprodukten können in an sich bekannter Weise bi- oder mehrfunktionelle Polymere - z.B. lineare oder sternförmige Blockcopolymere - hergestellt werden.

Eine besonders bevorzugte Initiatormischung wird als Lösung in einem aliphatischen oder cycloaliphatischen Kohlenwasserstoff eingesetzt, enthält keine Lewisbase und als Bestandteil A: Lithiumalkyl mit 2 bis 6 C-Atomen und als Bestandteil B: Magnesium-, Zink- oder Aluminium-alkyl. Besonders bevorzugt sind als Bestandteil B: Dibutylmagnesium, Dibutylzink, Triisobutylaluminium oder Tri-n-hexylaluminium.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das erfindungsgemäße Verfahren führt je nach Wahl der Initiatorkonzentration und -zusammensetzung, des speziell angewandten Verfahrensablaufs und anderer Parameter, wie Temperatur und evt. Temperaturverlauf zu Polymerisaten mit hohem oder niedrigem Molgewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Die Breite der Molgewichtsverteilung läßt sich durch die Wahl der Reaktionstemperatur (niedriger bzw. höher), die Art und Weise der Zugabe des Initiators oder der Monomeren und die Verfahrensführung in bekannter Weise beeinflussen.

Zweckmäßig wird bis zum vollständigen Umsatz polymerisiert, wobei die höchste erreichte Temperatur bei dienhaltigen Monomeren i.a. unter 150°C bleiben kann. Temperaturen von bis zu 300, bevorzugt jedoch nicht über 250°C können bei dienfreien Monomeren zweckmäßig sein.

Durch die erfindungsgemäße Zugabe einer metallorganischen Verbindung eines mindestens zweiwertig auftretenden Elements läßt sich die Reaktionsgeschwindigkeit ohne Nachteile für die Polymereigenschaften deutlich absenken bzw. die Temperatur erhöhen; dadurch wird es einerseits möglich, die Entwicklung der Polymerisationswärme über einen längeren Zeitraum zu verteilen und damit in einem kontinuierlichen Verfahren den zeitlichen bzw. - z.B. bei einem Rohrreaktor örtlichen - Temperaturverlauf einzustellen. Z.B. kann dafür gesorgt werden, daß bei anfänglich hoher Monomerkonzentration noch keine hohe Temperatur auftritt, andererseits ist bei der schließlich, d.h. bei einem weiter fortgeschrittenen Umsatz auftretenden hohen Temperatur eine ungestörte Polymerisation bei gleichzeitig hoher Raumzeitausbeute möglich. Bei diesem Verfahren treten Wandbeläge nicht mehr auf.

Mit dem Verfahren ist es möglich, neue Styrolpolymere mit einem Restmonomerengehalt von weniger als 50 ppm, einem Gehalt an cyclischen Dimeren und Trimeren von weniger als 1000 ppm, einer Uneinheitlichkeit M_{W}/M_{N} von mehr als 1,5 und einem Schmelzflußindex MVI_{200°C/5kg} von mehr als 4 g/10 min zu erhalten. Die Erfindung betrifft daher weiterhin Styrol(homo)polymere mit den vorstehend angegebenen Eigenschaften.

Die Zielprodukte sind Polystyrol sowie Styrol-Butadien-Blockcopolymerisate erhalten. Es ist auch möglich, mit dem erfindungsgemäßen Verfahren schlagzähes Polystyrol (HIPS) herzustellen, wobei als Kautschuke Polybutadien oder Styrol-Butadien-Blockcopolymerisate eingesetzt werden können.

Das Verfahren wird, kontinuierlich betrieben und zwar, wie eingangs angedeutet, insbesondere bei hoher Temperatur, wofür sich verschiedene Verfahren eignen, die nachstehend im einzelnen beschrieben werden.

Ein Verfahren, das bei hoher Monomerkonzentration durchführbar ist und sich durch besonders wirtschaftlichen Betrieb auszeichnet und es erlaubt, restmonomerenarme Polymere herzustellen und eine sichere Steuerung der Polymerisationsgeschwindigkeit und damit Temperaturführung ermöglicht, besteht darin, daß man die Polymerisation kontinuierlich unter nicht-isothermen Bedingungen und ohne Rückvermischung - vorzugsweise in einem Rohr- oder Rohrbündelreaktor - bis zum vollständigen Umsatz durchführt, wobei die Temperatur am Reaktorausgang i.a. mindestens 100° C beträgt und 300°C nicht überschreitet. Bevorzugt ist eine Endtemperatur von bis zu 250°C. Diese sollte nicht überschritten werden, wenn auf besonders niedrigen Restmonomerengehalt Wert gelegt wird. In vielen Fällen wird man mit einer Temperatur von bis zu 200°C auskommen. Bei den genannten Temperaturen ist die Viskosität auch konzentrierter Lösungen oder sogar Schmelzen hinreichend gering, sodaß sie gefördert, umgewälzt und schließlich ausgetragen werden können, ohne mechanisch geschädigt zu werden.

Das erfindungsgemäße Verfahren kann in jedem druck- und temperaturfesten Rohrreaktor durchgeführt werden und führt wahlweise zu Polymerisaten mit hohem oder niedrigem Molgewicht, je nach der Wahl der Initiatorkonzentration. Geeignet sind zum Beispiel Rohrreaktoren oder Rohrbündelreaktoren mit oder ohne Einbauten. Einbauten können statische oder bewegliche Einbauten sein. Das gesamte Monomer kann am Reaktoreingang zugeführt werden; das Verfahren ist aber auch auf Verfahrensvarianten anwendbar, bei denen ein Teil des Monomeren an einer stromab liegenden Stelle eingespeist wird, also z.B. bei der Copolymerisation, die auf diese Weise, vor allem wenn mehrere Blöcke nacheinander angefügt werden sollen, sehr aufwandsparend möglich ist.

Die Temperatur des Einsatzgemisches, d.h, am Reaktoreingang beträgt zweckmäßig nicht mehr als 80°C; bevorzugt ist eine Anfangstemperatur von bis zu 30, z.B. 0 bis 30°C. Der Temperaturverlauf über die Umsatzstrecke hinweg ist naturgemäß von der Geometrie dieser Strecke abhängig. Man führt zweckmäßig einen Vorversuch durch und richtet es durch Wahl der Menge an mehrwertigem Metallalkyl so ein, daß am Reaktorausgang bzw. nach Erreichen vollständigen Umsatzes die gewünschte Temperatur erreicht wird. Damit kann ein praktisch vollständiger Umsatz in günstiger Zeit erreicht werden. Die Verweilzeit beträgt z.B. 0,1 bis 1,5 Stunden. Bevorzugt ist eine Verweilzeit von nicht mehr als 1,2 Stunden.

Eine erfindungsgemäß ebenfalls vorteilhafte Ausführungsform mit speziellen Möglichkeiten der Produktgestaltung besteht in der Umsetzung in einem rückvermischenden Reaktor, wobei man Polymerisationsauslöser und/oder Geschwindigkeitsregler gemeinsam mit oder getrennt von den Monomeren ständig frisch zuführt.

Ein besonderer Vorteil der kontinuierlich betriebenen Polymerisation in einem rückvermischenden Reaktor ist die erzielte breitere Molekulargewichtsverteilung, die für die Ausgewogenheit vieler Eigenschaften des Produkts häufig erwünscht ist.

Als rückvermischenden Reaktor verwendet man z.B. einen kontinuierlich betriebenen Rührkessel (CSTR) oder einen Umlaufreaktor.

Zweckmäßigerweise werden stationäre Bedingungen dadurch sicherstellt, daß man die Umsetzung unter isothermen Bedingungen vornimmt.

Die erfindungsgemäße Ausführungsform des Verfahrens in einem rückvermischenden Reaktionsraum findet i.a. in Rührkesseln oder Schlaufenreaktoren statt, also Reaktionsräumen, in denen die Rückvermischung durch einen ungeordnet oder geordnet im Kreis geführten Produktstrom stattfindet, dem ständig frisches Reaktionsgut zugeführt und menr oder weniger umgesetztes Reaktionsgut entnommen wird. Es kann auch eine Kombination mehrerer rückvermischender Einheiten benutzt werden, beispielsweise eine Rührkesselkaskade. Zweckmaßigerweise sind die Reaktoren soweit druckfest ausgeführt, als sie den Dampfdruck der Reaktionsteilnehmer und Hilfsstoffe aufnehmen müssen. Eine besondere Förderung der Umsetzung durch Druck findet dagegen wie bei den meisten Polymerisationsreaktionen nicht statt. Geeignet sind Reaktoren mit den üblichen Fördereinrichtungen, d.h. Rührern bzw. Propellern, um die Flüssigkeit in Bewegung zu halten und sie sind entweder mit Einbauten versenen, die fest angeordnet (statisch) oder beweglich sein können oder besitzen keine Einbauten.

Die Reaktionstemperatur sollte während der Umsetzung konstant gehalten und bei Styrolmonomeren 300, bevorzugt 250°C, besonders bevorzugt 200°C nicht überschreiten. Bei Verwendung von Dienmonomeren nimmt man die Umsetzung zweckmäßigerweise bei maximal 150°C vor. Bei Wahl einer Rührkesselkaskade oder gleichwirkenden anderen Vorrichtungen kann natürlich die Temperatur in den aufeinanderfolgenden Reaktionsräumen unterschiedlich sein und z.B. ansteigen.

Der Umsatz im kontinuierlich betriebenen ruckvermischenden Reaktor kann - theoretisch -nicht vollständig sein. Es ist aber z.B. bei einem Umlaufreaktor durch geeignete Wahl der Verfahrensparameter wie z. B. dem Kreislaufverhältnis oder der Verweilzeit möglich, einen nahezu quantitativen Umsatz zu erreichen; vorteilhaft ist ein Umsatz von bis zu 95%, bevorzugt bis zu 90%, besonders bevorzugt bis zu 80%.

Zweckmäßig wählt man aber die Ausgangskonzentration von Monomerem und Lösungsmittel so, daß sich - bei entsprechendem Umsatz - ein Feststoffgehalt von bis zu 90%, vorzugsweise 80%, besonders bevorzugt bis zu 70% einstellt. Je nach dem gewählten Reaktortyp wird man u.U. einen Feststoffgehalt von nur 30 - 50% einstellen, um z.B. eine ausreichende Bewegung des Reaktionsgemisches aufrecht zu erhalten. Um das Lösungsmittel und/oder - bei unvollständigem Umsatz - restliches Monomeres zu entfernen führt man die Mischung anschließend einer geeigneten Entgasungseinrichtung zu. Zur Unterstützung der Entgasung kann das Produkt auch kurzfristig höheren Temperaturen, z.B. bis 350°C ausgesetzt werden. Hierbei werden restmonomeren- und oligomerenarme Produkte auch dann erhalten, wenn man von vorneherein auf vollständigen Umsatz verzichtet hat.

Eine weitere mögliche Verfahrensvariante ergibt sich dadurch, daß das erfindungsgemäße Verfahren in mindestens zwei Reaktionszonen durchgeführt wird.

Eine erste Reaktionszone dient zur Vorpolymerisation und ist als rückvermischende Einheit ausgebildet, die einen Wärmetauscher aufweist. Sie kann als Rührkessel oder auch als Umlaufreaktor mit oder ohne statischen Mischern ausgeführt und gegebenenfalls unterteilt sein, z.B. in Form einer Rührkesselkaskade. Ein hydraulisch betriebener - d.h. vollständig mit Flüssigkeit befüllter - Umlaufreaktor kann insbesondere bei höherer Viskosität des Reaktorinhalts vorteilhaft sein. Der gewünschte Umsatz richtet sich nach der beherrschbaren Viskosität der Reaktionsmasse und wird im allgemeinen möglichst hoch gewählt, sodaß die Verweilzeit bis zum vollständigen Umsatz in der anschließenden zweiten Reaktionszone möglichst kurz und die maximale Temperatur möglichst gering ist, damit keine nennenswerte Schädigung oder Depolymerisation auftritt. Zweckmäßigerweise wird in dieser ersten Reaktionszone bis zu einem Umsatz von 20 bis 80, vorzugsweise von 40 bis 60 Gew.-% durchgeführt. Die Polymerisationstemperatur in der ersten Reaktionszone beträgt 20 bis 150°C, vorzugsweise 40 bis 120°C und ganz besonders bevorzugt 60 bis 100°C.

Die Verweilzeit in der ersten Reaktionszone beträgt z.B. 0,05 bis 5 Stunden. Bevorzugt ist eine Verweilzeit von wenigstens 0,3 Stunden. Die Polymerisationswärme kann bei Verwendung von Rührkesseln z.B. über Siedekühlung und bei Umlaufreaktoren über die Wand abgeführt werden.

Die Monomere, der Initiator und der Retarder können an einer einzigen Stelle zugeführt werden; es ist aber auch möglich, einen Teil der Monomere, des Initiators oder Retarders an einer weiteren, z.B. stromab liegenden Stelle einzuspeisen. Auf diese Weise läßt sich z.B. eine multimodale Molekulargewichtsverteilung erreichen. Es werden Initiator und Retarder, verdünnt mit n-Hexan, Heptan, oder Cyclohexan, der ersten Reaktionszone gemeinsam zugegeben. Bei Bedarf kann noch ein Lösungsvermittler, beispielsweise, Toluol, Ethylbenzol, oder mitverwendet werden. Die Gesamtmenge an Lösungsmittel, das auf diese Weise zugesetzt wird, sollte i.a. nicht mehr als 30, bevorzugt nicht mehr als 10 %, bezogen auf die Monomermenge betragen, um die spätere Aufarbeitung möglichst einfach zu gestalten.

Die zweite Reaktionszone dient der Vervollständigung der Umsetzung. Hierfür kann jeder druck- und temperaturfeste, im wesentlichen rückvermischungsfreie Reaktor verwendet werden. Geeignet sind vor allem Rohrreaktoren oder Rohrbündelreaktoren mit oder ohne Einbauten. Einbauten können statische oder bewegliche Einbauten sein. Ebenso können Ringscheiben- oder Turmreaktoren verwendet werden.

Der Temperaturverlauf in der zweiten Reaktionszone über die Rohrstrecke hinweg ist naturgemäß von der Geometrie dieser Strecke und dem erreichten Umsatz in der ersten Reaktionszone abhängig. Man führt zweckmäßig einen Vorversuch durch und richtet es so ein, daß am Reaktorausgang der zweiten Reaktionszone, d.h. nach Erreichen vollständigen Umsatzes eine Temperatur von 150 bis 250°C erreicht, jedoch eine Temperatur von 300°C nicht überschritten wird. Damit wird ein vollständiger Umsatz in günstiger Zeit erreicht. Vollständiger Umsatz bedeutet praktisch, daß nicht mehr als 100 ppm Restmonomer verbleiben. Wenn eine vorhandene Entgasungsvorrichtung weiter benützt werden soll, kann aber auch ein Umsatz von weniger als 99%, z.B. 95 bis 98% ausreichend sein. In diesen Fällen ist ein Restgehalt von mehr als 100 ppm zu erwarten.

Der Temperaturverlauf in der zweiten Reaktionszone kann durch externe Temperierung beliebig modifiziert werden. Beispielsweise kann in der zweiten Reaktionszone adiabatisch, isoperibol (mit konstantem Wärmefluß) oder isotherm gearbeitet werden. Durch Kühlen oder Heizen einzelner Reaktorabschnitte der zweiten Reaktionszone kann ein der Reaktorgeometrie oder den gewünschten Produkteigenschaften angepaßtes Temperaturprofil eingestellt werden. Vorteilhaft läßt man durch adiabatischen Verlauf, d.h. dadurch, daß man weder heizt noch kühlt, die Temperatur in der zweiten Reaktionszone zum Ende hin ansteigen. Dies wirkt einem übermäßigen Viskositätsanstieg mit zunehmendem Umsatz entgegen und ermöglicht somit nahezu vollständigen Umsatz zu Produkten mit niedrigem Restmonomeren- und Oligomerengehalt. Dies ist insbesondere von Bedeutung, wenn man größere Operationen vermeiden, d.h. das erhaltene Produkt - gegebenenfalls nach Zerstörung der lebenden Kettenenden - unmittelbar konfektionieren möchte.

In einer besonderen Ausführungsform des Verfahrens besteht die zweite Reaktionszone aus einem ein- oder mehrteiligen Rohrreaktor ohne Wärmetauscher. Gegebenenfalls können mehrere hintereinander geschaltete Rohrreaktoren verwendet werden.

Besonders bevorzugt wird bis zum vollständigen Umsatz in einem Rohrreaktor ohne Wärmetauscher polymerisiert, wobei die Polymerisation in der ersten Reaktionszone bis zu einem Umsatz von mindestens 40% geführt wird.

Die Verweilzeit in der zweiten Reaktionszone beträgt z.B. 0,05 bis 1 Stunde . Bevorzugt ist eine Verweilzeit von nicht mehr als 0,3 Stunden. Die Umsetzung wird gewöhnlich bei einem ausreichenden Druck von bis zu 10, eventuell auch bis zu 100 bar durchgeführt.

Mit dem Verfahren ist es möglich, Polymere aus vinylaromatischen Monomeren mit einem Restmonomerengehalt von weniger als 50 ppm, einem Gehalt an cyclischen Dimeren und Trimeren von weniger als 1000 ppm, einer Molekulargewichtsverteilung M_{W}/M_{N} über 1,5 und einem Schmelzflußindex MVI_{200°C/5kg} von über 4 g/10 min zu erhalten. Bei geeigneter Verfahrensführung ist ein Restgehalt von weniger als 250, ja sogar weniger als 100 ppm an Monomeren erreichbar.

Die Polymeren eignen sich insbesondere zur Herstellung von Fasern, Folien und Formkörpern: Sie können in bekannter Weise mit Hilfs- und Füllstoffen oder weiteren Polymeren gemischt (zu sog. Blends verarbeitet) werden. In einer besonderen Ausführungsform wird das erfindungsgemäße Verfahrensprodukt in bekannter weise durch Zusatz von Kautschukpolymeren schlagzäh modifiziert.

### Beispiele unter Verwendung von Rohrreaktoren:

### Beispiel 1.1

Ein Doppelmantel-Rohrreaktor mit einem Innendurchmesser von 29,7 mm und einer Länge von 2100 mm, ausgelegt für einen Druck von bis zu 100 bar und für eine Temperatur von bis zu 350°C wird im Gleichstrom mit einem Wärmeträgermedium versorgt, dessen Eingangstemperatur 60°C beträgt. Der Reaktor ist mit drei gleichmäßig über die Reaktionsstrecke verteilten Thermofühler ausgestattet. Über drei getrennte Pumpen werden stündlich 10 Liter Styrol und 1,1 Liter Ethylbenzol mit einer Temperatur von jeweils 5°C und 115 ml einer entsprechend vorgekühlten Lösung von 10 g (sec-Bu)Li und 40 g (n-Bu)₂Mg je Liter in Ethylbenzol kontinuierlich zugeführt.

Das Reaktionsgemisch wird am Reaktorende mittels einer HPLC-Pumpe mit 100 ml/h einer 20 gew.-%igen Lösung von Methanol in Ethylbenzol versetzt und in einem nachgeschalteten Rohrstück homogenisiert, das zu diesem Zweck einen statischen Mischer aufweist. Die am Reaktorende gemessene Temperatur beträgt 205°C und ist die höchste im System auftretende Temperatur. Die glasklare, farblose Polymerschmelze wird über ein Drosselventil in einen auf 20 mbar gehaltenen Entgasungstopf entspannt, mit einer Schneckenpumpe abgezogen, verstrangt und granuliert. Der Restgehalt an Monomer liegt unter 10 ppm. Die Raum-Zeit-Ausbeute an Polymerisat errechnet sich zu ca. 6,2 (kg·l⁻¹·h⁻¹). Das erhaltene Produkt wies ein Molekulargewicht M_{W} von 104 000 bei einer Uneinheitlichkeit M_{W}/M_{N} von 1,29 auf.

### Beispiel 1.2

Das Verfahren des Beispiels 1 läßt sich bei im wesentlichen lösungsmittelfreier Arbeitsweise wie folgt gestalten: Dem Reaktor werden stündlich über zwei getrennte Pumpen 15 Liter Styrol mit einer Temperatur von 5°C und 170 ml einer Lösung von 5 g s-Butyl-Li und 55 g Di-n-Butyl-Mg je l in Ethylbenzol (gekühlt auf 5°C) kontinuierlich zugeführt. Die am Reaktorende gemessene Temperatur beträgt 226°C und ist die höchste im System auftretende Temperatur.

Das Reaktionsprodukt wird wie beschrieben aufgearbeitet. Der Restgehalt an Monomer beträgt 18 ppm. Die Raum-Zeit-Ausbeute an Polymerisat errechnet sich zu ca. 9,3 (kg·l⁻¹·h⁻¹). Das erhaltene Produkt wies ein Molekulargewicht M_{W} von 149 000 bei einer Uneinheitlichkeit M_{W}/M_{N} von 1,37 auf.

### Beispiel 1.3

Dem vorstehend beschriebenen Reaktor werden stündlich 15 Liter Styrol mit einer Temperatur von 5°C, und 170 ml einer auf 5°C gekühlten Lösung von 10 g s-BuLi und 80 g Et₂Zn je l in Ethylbenzol zugeführt. Die am Reaktorende gemessene Temperatur beträgt 234°C. Die Raum-Zeit-Ausbeute an Polymerisat errechnet sich zu ca. 9,3 (kg·l⁻¹·h⁻¹). Der Restgehalt an Monomer beträgt 23 ppm. Das erhaltene Produkt wies ein Molekulargewicht M_{w} von 205 000 bei einer Uneinheitlichkeit M_{W}/M_{N} von 1,50 auf.

Das Reaktionsprodukt wird wie beschrieben verstrangt und granuliert.

### Vergleichsversuch 1.1

Wie vorstehend beschrieben, werden stündlich 10 Liter Styrol, 1,1 Liter Ethylbenzol und 115 ml 12%-ige Lösung von s-BuLi verarbeitet. Die bereits in der Reaktormitte erreichte maximale Temperatur beträgt 266°C.

Nach Beendigung der Umsetzung und Aufarbeitung wie vorstehend beschrieben erhält man ein Produkt, das einen Restgehalt an Monomer von 132 ppm aufweist. Das erhaltene Produkt wies ein Molekulargewicht M_{w} von 163 500 bei einer Uneinheitlichkeit M_{W}/M_{N} von 1,67 auf. Im Unterschied zu den Produkten aus Beispiel 1.1 - 1.3 zeigte eine GPC-Analyse einen deutlichen Anteil an niedermolekularen Polymeren und cyclischen Dimeren und Trimeren.

### Vergleichsversuch 1.2

Wie vorstehend beschrieben, werden stündlich 15 Liter Styrol und 170 ml 12%-ige Lösung von s-BuLi verarbeitet. Die bereits in der Reaktormitte erreichte Temperatur beträgt 285°C. Es wurde nicht untersucht, ob an einer anderen Stelle des Reaktors höhere Temperaturen erreicht werden.

Nach Beendigung der Umsetzung und Aufarbeitung wie vorstehend beschrieben erhält man ein Produkt, das einen Restgehalt an Monomer von 185 ppm aufweist. Das erhaltene Produkt wies ein Molekulargewicht M_{W} von 229 000 bei einer Uneinheitlichkeit M_{W}/M_{N} von 2,1 auf und besaß einen deutlichen Anteil an niedermolekularen Polymeren und cyclischen Dimeren und Trimeren.

### Beispiele unter Verwendung von Rührkesseln

### Beispiel 2.1

Der als Reaktor eingesetzte Rührkessel hat ein Volumen von 2 1. Als Rührer wird ein Standard-Ankerrührer verwendet. Der doppelmantelige Reaktor ist in der Mantelkammer mit einem Wärmeträgermedium gefüllt, das eine isotherme Fahrweise gestattet. Das Wärmeträgermedium wird im Durchlauf durch Mantelkammer und Thermostat geleitet. Die Temperaturmessung erfolgt über zwei Thermoelemente direkt im Reaktionsmedium und kann im Verbund mit dem Thermostaten exakt variiert werden. Der Reaktor ist für einen Druck von 60 bar und für das Arbeiten unter Schutzgas ausgelegt.

Dem Reaktor wurden stündlich 1,5 l Styrol zugeführt. Parallel dazu wurde stündlich eine Mischung aus 0,43 mmol s-Butyllithium (1 M in Cyclohexan) als Starter und 8,57 mmol Dibutylmagnesium (1 M in Heptan) als Retarder über einen statischen Mischer dem Reaktor als eine Lösung zugeführt. Die Polymerisationstemperatur wurde auf 105°C geregelt. Nach etwa drei Stunden war ein stationärer Zustand erreicht, bei dem sich der Feststoffgehalt (ca. 30%) nicht weiter veränderte. Die viskose Lösung wurde kontinuierlich abgezogen, mit einer zum Retarder/Initiator stöchiometrischen Isopropanolmenge vermischt und in einer Entgasungsvorrichtung bei 10 mbar behandelt. Die Schmelze wurde mit einer Zahnradpumpe ausgetragen, durch eine Düse gepreßt und granuliert. Das Produkt war klar und farblos. Die mittels GPC bestimmte Molekulargewichtsverteilung besaß ein Maximum bei 74000 g/mol und ein Verhältnis M_{W}/M_{N} von 2,41. Die Raum-Zeit-Ausbeute an Polymerisat errechnet sich zu ca. 200 [g·l⁻¹·h⁻¹].

### Beispiel 2.2

Es wurde entsprechend Beispiel 2.1 verfahren. In den Reaktor wurden stündlich 1 l Styrol, 0,073 mmol s-Butyllithium (1 M in Cyclohexan) und 5,9 mmol Dibutylmagnesium (1 M in Hexan) dosiert. Die Polymerisationstemperatur wurde auf 120°C eingestellt.

Es stellte sich ein stationärer Feststoffgehalt von ca. 40% ein. Das Produkt war klar und farblos. Die mit GPC bestimmte Molekulargewichtsverteilung besaß ein Maximum bei 82000 g/mol und ein Verhältnis M_{W}/M_{N} von 2,52. Die Raum-Zeit-Ausbeute an Polymerisat errechnet sich zu ca. 180 [g·l⁻¹·h⁻¹].

### Beispiel 2.3

Es wurde entsprechend Beispiel 2.1 verfahren. Dem Reaktor wurden stündlich 1 1 Styrol, 9,0 mmol s-Butyllithium (1 M in Cyclohexan) und 7,65 mmol Triisobutylaluminium (1 M in Hexan) zugeführt. Die Polymerisationstemperatur wurde auf 75°C eingeregelt. Es stellte sich ein stationärer Feststoffgehalt von ca. 60% ein. Das Produkt war klar und farblos. Die mit GPC bestimmte Molekulargewichtsverteilung besaß ein Maximum bei 97000 g/mol und ein Verhältnis M_{W}/M_{N} von 2,35. Die Raum-Zeit-Ausbeute an Polymerisat errechnet sich zu ca. 270 [g·l⁻¹·h⁻¹].

### Beispiel 2.4

Es wurde entsprechend Beispiel 2.1 verfahren. Dem Reaktor wurden stündlich 1 1 Styrol, 9,0 mmol s-Butyllithium (1 M in Cyclohexan) und 7,20 mmol Diisobutylaluminiumhydrid (1 M in Hexan) bei einer Temperatur von 91°C zudosiert. Es stellte sich ein stationärer Feststoffgehalt von ca. 75% ein. Das Produkt war klar und farblos. Die mit GPC bestimmte Molekulargewichtsverteilung besaß ein Maximum bei 122 000 g/mol und ein Verhältnis M_{W}/M_{N} von 2,62. Die Raum-Zeit-Ausbeute an Polymerisat errechnet sich zu ca. 340 [g.l⁻¹·h⁻¹].

### Beispiel 2.5

Es wurde entsprechend Beispiel 2.1 verfahren. Dem Reaktor wurden stündlich 1 l Styrol, 9,0 mmol s-Butyllithium (1 M in Cyclohexan) und 45 mmol Trihexylaluminium (1 M in Hexan) bei einer Temperatur von 79°C zudosiert. Es stellte sich ein stationärer Feststoffgehalt von ca. 50% ein. Das Produkt war klar und farblos. Die mit GPC bestimmte Molekulargewichtsverteilung besaß ein Maximum bei 89000 g/mol und ein Verhältnis M_{W}/M_{N} von 2,27. Die Raum-Zeit-Ausbeute an Polymerisat errechnet sich zu ca. 230 [g·l⁻¹·h⁻¹].

### Beispiel 2.6

Ein einen doppelmanteligen 3 l-Rührkessel, ausgerüstet mit einem Ankerrührer, Thermoelementen, Zuläufen und Vorrichtungen zum Arbeiten unter Stickstoff wurde bei einer Füllhöhe von 70% kontinuierlich unter Schutzgas stündlich 1 kg Styrol und getrennt davon 19 g/h einer Lösung aus 0.54 g s-Butyllithium (1.6 M in Cyclohexan), 5.2 g Dibutylmagnesium (1 M in Heptan) und 13.3 g Cyclohexan zudosiert. Die Temperatur wurde auf 95°C gehalten; der Feststoffgehalt des Reaktionsgemisches erreichte im stationären Zustand 45%.

Das Produkt wurde mit einer Zahnradpumpe kontinuierlich ausgetragen und wie in Beispiel 2.1 beschrieben aufgearbeitet. Es wurde ein klares, farbloses Granulat erhalten. Die mit GPC bestimmte Molekulargewichtsverteilung besaß ein Maximum bei 110000 g/mol und ein Verhältnis M_{W}/M_{N} von 2,63. Die Raum-Zeit-Ausbeute an Polymerisat errechnet sich zu ca. 215 [g·l⁻¹·h⁻¹].

### Beispiel 2.7

Entsprechend Beispiel 2.6 wurden dem Reaktor kontinuierlich 750 g/h Styrol und getrennt davon 19 g/h einer Lösung aus 0.27 g n-Butyllithium (1.4 M in Cyclohexan), 5.7 g Dibutylmagnesium (1 M in Hexan) und 13.6 g Cyclohexan zugeführt. Die Temperatur wurde auf 120°C gehalten; der Feststoffgehalt des Reaktionsgemisches erreichte im stationären Zustand 85%.

Das Produkt wurde mit einer Zahnradpumpe kontinuierlich ausgetragen und wie in Beispiel 2.1 beschrieben aufgearbeitet. Man erhielt ein klares, farbloses Granulat. Die mittels GPC bestimmte Molekulargewichtsverteilung besaß ein Maximum bei 102 000 g/mol und ein Verhältnis M_{W}/M_{N} von 2,91. Die Raum-Zeit-Ausbeute an Polymerisat errechnet sich zu ca. 300 [g·l⁻¹·h⁻¹].

Zur weiteren Untersuchung des Verhaltens eines rückvermischenden Reaktors wurden roch einige absatzweise Polymerisationsversuche durchgeführt.

Die Beispiele 2.8 bis 2.11 sind nicht erfindungsgemäß.

### Beispiel 2.8

In einen 10 l Rührkessel wurden 5000 g Styrol vorgelegt und auf 70°C erwärmt. Bei dieser Temperatur wurde eine vorgemischte Katalysatorlösung aus 0,7 ml einer 1,6 molaren s-Butyllithiumlösung in Cyclohexan und 22 ml einer 1 molaren Dibutylmagnesium-Lösung in n-Hexan zugegeben. Anschließend wurde die Temperatur auf 120°C erhöht und das System für 5 h bei dieser Temperatur gehalten. Zu diesem Zeitpunkt hatte das Reaktionsgemisch einen Feststoffgehalt von 76%. Es wurde mit einer zum Retarder/Initiator stöchiometrischen Menge Isopropanol abgebrochen und bei 8 mbar entgast, mit einer Zahnradpumpe ausgetragen und granuliert. Es wurde ein klares, farbloses Granulat erhalten mit einem durch GPC bestimmten Molekulargewicht M_{N} von 85 000 g/mol und einer Verteilungsbreite M_{W}/M_{N} von 1,79.

### Beispiel 2.9

Es wurde wie in Beispiel 2.8 verfahren. Nach 20 h hatte die Reaktionsmischung einen Feststoffgehalt von 96%. Das erhaltene Granulat besaß ein Molekulargewicht M_{N} von 138 000 g/mol und einer Verteilungsbreite M_{W}/M_{N} von 1,92.

### Beispiel 2.10

In einem 1 l-Rührkessel wurden 600 g Styrol vorgelegt und mit einer Mischung aus 0.12 ml einer 1,4 molaren Lösung von s-Butyllithium in Cyclohexan und 8,1 ml einer 1 molaren Lösung von Dibutyimagnesium in n-Hexan versetzt. Es wurde auf 150°C erhitzt. Nach 9 min wurde die Reaktion mit 2 ml Ethanol abgebrochen. Man erhielt eine klare, viskose Lösung mit einem Feststoffgehalt von 51 Gew.-%. Das Reaktionsgemisch wurde anschließend bei 8 mbar entgast, mit einer Zahnradpumpe ausgetragen und granuliert. Man erhielt ein klares, farbloses Granulat mit einem Molekulargewicht M_{N} von 28 000 g/mol und einer Verteilungsbreite M_{W}/M_{N} von 1,64.

### Beispiel 2.11

In einen 100 l fassenden Kessel, der mit einer Wandkühlung und zusätzlich einem mit einer Pumpe versorgten, außen liegenden Wärmetauscher (Rohrbündelwärmetauscher) ausgerüstet ist, werden 45 l Cyclohexan und 3 kg Styrol vorgelegt, mit einer 12%-igen Lösung von sec. -Butyl-Lithium in Hexan bis zu einer leichten Rotfärbung titriert und auf 40°C erwärmt. Dann setzt man 140 ml einer insgesamt 12%-igen Lösung eines Gemisches aus 1 Gew.-Teil s-Butyllithium und 4 Gew.-Teilen Dibutylmagnesium in Hexan zu. Die Temperatur bleibt auf 40°C. Anschließend wird ein Gemisch aus 14 g Butadien und 3 kg Styrol zugegeben. Unter diesen Bedingungen steigt die Temperatur innerhalb von 30 Minuten bis auf 53°C an. Das erhaltene Styrol/Butadien/Styrol-Blockcopolymerisat weist im Zugversuch nach DIN 53455 eine Reißfestigkeit von 24 MPa auf. Das Molekulargewicht M_{w} wurde zu 125 000 bei einer Uneinheitlichkeit M_{W}/M_{N} von 1,15 bestimmt.

### Vergleichsversuch 2.1

Es wird entsprechend Beispiel 2.11 verfahren, jedoch kein Dibutylmagnesium verwendet. Dabei ist es in der verwendeten apparativen Anordnung nicht möglich, einen schnellen Temperaturanstieg zu verhindern. Es wird trotz Kühlung innerhalb von 12 Minuten eine Temperatur von 79°C erreicht. Nach Zugabe des Butadien/Styrol-Gemisches steigt die Temperatur innerhalb von 12 Minuten bis auf 139°C. Das erhaltene Blockcopolymerisat weist im Zugversuch nach DIN 53455 eine Reißfestigkeit von 16 MPa auf, ein Hinweis darauf, daß ein Teil der lebenden Ketten durch die hohe Temperatur abgebrochen ist. Das Molekulargewicht M_{w} wurde zu 145 000 bei einer Uneinheitlichkeit M_{W}/M_{N} von 1,82 bestimmt.

### Vergleichsversuch 2.2

Es wird entsprechend Beispiel 2.11 verfahren, jedoch bei deutlich stärkerer Verdünnung des Monomeren bzw. Polymeren: Es werden 60 l Cyclohexan und 1,5 kg Styrol vorgelegt und kein Dibutylmagnesium verwendet. Es werden 70 ml 12%ige Butyllithium-Lösung verwendet. Zunächst ist kein nennenswerter Temperaturanstieg zu beobachten. Es wird trotz Kühlung innerhalb von 12 Minuten eine Temperatur von 49°C erreicht. Nach Zugabe von 7 kg Butadien und 1,5 kg Styrol steigt die Temperatur innerhalb von 22 Minuten bis auf 71°C. Das erhaltene Blockcopolymerisat weist im Zugversuch nach DIN 53455 eine Reißfestigkeit von 23 MPa auf. Das Molekulargewicht M_{W} wurde zu 131 000 bei einer Uneinheitlichkeit M_{W}/M_{N} von 1,48 bestimmt

Verfahren mit einer Kombination aus einem rückvermischenden und einem nicht rückvermischenden Reaktionsraum

### Beispiele 3.1 bis 3.6 (Ergebnisse zusammengefaßt in Tabelle 1)

Die Versuchsanlage bestand aus einem 3,5 l fassenden heiz- und kühlbaren Rührkessel mit Ankerrührer, ausgelegt für einen Druck von 40 bar sowie einem nachgeschalteten Doppelmantel-Rohrreaktor mit einem Innendurchmesser von 10 mm und einer Länge von 4000 mm (Reaktorvolumen 0,314 l), ausgelegt für einen Druck von 100 bar. Der Rührkessel wies zwei, der Rohrreaktor drei gleichmäßig über die Reaktionsstrecke verteilte Thermofühler auf. Beide Reaktoren waren über eine beheizbare Zahnradpumpe verbunden.

Zu Beginn wurde der Rührkessel zunächst befüllt (Füllstand 1,5 Liter), die Polymerisation gestartet und nach Erreichen des vorgesehenen Umsatzes (Feststoffgehalts) die Verbindung zum Rohrreaktor hergestellt, um einen stationären kontinuierlichen Betrieb zu erreichen.

Es wurden stündlich kontinuierlich über eine Pumpe die für eine Verweilzeit von einer Stunde erforderliche Menge von 1,5 l Styrol und über eine weitere Pumpe eine frisch unter Schutzgas hergestellte Mischung 1-molarer Lösungen von s-Butyllithium in Cyclohexan und Dibutylmagnesium in Heptan im Verhältnis 1:5 (für Beispiel 1: entsprechend stündlichen Mengen von 1,2 bzw. 6 mmol) dem auf 50°C vorgeheizten Rührkessel zugeführt und bei einer Massetemperatur von 50°C bis zu einem Umsatz von 40% (Feststoffgehalt) polymerisiert. Nach erstmaligem Erreichen des gewünschten Umsatzes wurde die entsprechende Menge dem Rohrreaktor zugeführt und ohne Wärmeabfuhr auspolymerisiert. Die am Reaktorende gemessene Temperatur war die höchste im System auftretende Temperatur und betrug jeweils 180°C, die Verweilzeit im Rohrreaktor betrug 10 Minuten. Das Reaktionsprodukt wurde über ein Drosselventil in einen auf 20 mbar gehaltenen Topf entspannt. Die glasklare, farblose Polymerschmelze wurde mit einer Zahnradpumpe über einen Düsenkopf ausgetragen, verstrangt und granuliert.

Der Gehalt an Restmonomeren wurde gaschromatographisch, das Molekulargewichtsverhältnis M_{W}/M_{N} gelpermeationschromatographisch (Polystyrolstandard; Säulenmaterial: vernetztes Polystyrol; Lösungsmittel: THF;) ermittelt. Der Schmelzflußindex MVI_{200°C/5kg} wurde nach DIN 53735 ermittelt.

Die auf das Volumen der gesamten Anlage (Füllstandsvolumen des Vorreaktors + Volumen des Rohrreaktors) bezogene Raum-Zeit-Ausbeute errechnet sich zu ca. 0,8 [kg l⁻¹ h⁻¹].

### Vergleichsversuch V 3.1

Es wurde lediglich der Rührkessel der Anlage benutzt. Dieser wurde mit 1,5 l Styrol und 7,2 mmol sek-Butyllithium (1 M in Cyclohexan) bei 30°C beschickt. Die Temperatur stieg innerhalb einer Minute auf 282°C an. Das aufgearbeitete Polymere wies einen Restmonomerengehalt von 580 ppm auf.

### Vergleichsversuch V 3.2

Vergleichsversuch 3.1 wurde ohne Verwendung von Dibutylmagnesium als Retarder jedoch mit einer verdünnten Monomerlösung wiederholt. Hierzu wurde dem Rührkessel stündlich eine Lösung von 0,3 l Styrol in 1,2 l Ethylbenzol und 1,42 mmol/h s-Butyllithium (1 M in Cyclohexan) zugeführt.

**Tabelle 1**

| | | Beispiele/Vergleiche | | | | | | | |
|---|---|---|---|---|---|---|---|---|---|
| | | 3.1 | 3.2 | 3.3 | 3.4 | 3.5 | 3.6 | V 3.1 | V 3.2 |
| Styrol | [l/h] | 1,5 | 1,5 | 1,5 | 1,5 | 1,5 | 1,5 | 1,5 | 0,3 |
| Ethylbenzol | [l/h] | ― | ― | ― | ― | ― | ― | ― | 1,2 |
| sek―Butyllithium | [mmol/h] | 1,2 | 0,9 | 0,66 | 7,2 | 4,32 | 7,2 | 7,2 | 1,42 |
| Dibutylmagnesium | [mmol/h] | 6,0 | 6,3 | 6,6 | ― | 2,88 | ― | ― | ― |
| Triisobutylaluminium | [mmol/h] | ― | ― | ― | 4,32 | 1,72 | 6,5 | ― | ― |
| Temp. im Rührkessel (Rohrreaktoreingang) | [°C] | 50 | 80 | 120 | 70 | 50 | 130 | (282) | 80 |
| Restmonomerengehalt | [ppm] | 10 | 13 | 13 | 11 | 10 | 12 | 580 | 18 |
| Raum―Zeit―Ausbeute | [kg l⁻¹h⁻¹] | | 0,8 | 0,8 | 0,8 | 0,8 | 0,8 | ― | 0,16 |
| M_{W}/M_{N} | ― | 3,1 | 2,9 | 3,5 | 3,1 | 2,9 | 3,3 | ― | 1,08 |
| MVI_{200°C/5 kg} | [g/10min] | 6 | 5,9 | 6,3 | 6,1 | 5,9 | 6,2 | ― | 2,6 |

Die Vergleichsversuche V 3.1 und V 3.2 zeigen, daß in einer Anordnung, wie sie zur Vorführung der erfindungsgemäßen Beispiele verendet worden ist, die Umsetzung ohne die Verwendung eines retardierenden Zusatzes wie Dibutylmagnesium oder Tributylaluminium entweder (ohne Verdünnung) nicht steuerbar ist (V 3.1) oder, bei entsprechender Verdünnung, nur eine geringe Raum-Zeit-Ausbeute erlaubt. Die erfindungsgemäßen Beispiele 3.1 bis 3.6 erzielen gegenüber dem Vergleichsversuch V 3.2 außer wesentlich höherer Raum-Zeit-Ausbeute und einem wesentlich höheren Schmelzflußindex MVI Polymerisate mit wesentlich breiterer Molekulargewichtsverteilung.

### Beispiele für neuartige Initiatormischungen

Die Beispiele sind in den Tabellen 2 - 5 zusammengefaßt. In einer Vacuumapparatur, die für das Arbeiten unter Schutzgas ausgerüstet war, wurden 20 g Styrol und die entsprechende Menge an Metallalkyl bei tiefer Temperatur in eine Glasampulle abgefüllt, abgeschmolzen und gut vermischt. Die Ampulle wurde anschließend in ein Wärmebad der angegebenen Temperatur getaucht. Nach der angegebenen Zeit war jeweils vollständiger Umsatz erreicht. Die wirksame Initiatorkonzentration C_{[Li]} wurde als Quotient aus theoretischem zahlenmittleren Molekulargewicht auf Basis der eingesetzten Menge s-BuLi und mittels GPC tatsächlich gefundenem zahlenmittleren Molekulargewicht M_{N} ermittelt.

**Tab.2:**

| Dibutylmagnesium (DBM) als Retarder | | | | |
|---|---|---|---|---|
| | Versuch 1 | Versuch 2 | Versuch 3 | Versuch 4 |
| DBM [mhm]* | 11 | 15 | 20 | 40 |
| s―BuLi [mhm] * | 1 | 1 | 1 | 1 |
| Temp. [°C] | 75 | 90 | 120 | 150 |
| Zeit [h] | 1 | 1 | 1 | 1 |
| C_{[Li]} | 2 | 2,5 | 3 | 3 |

| | | | | |
|---|---|---|---|---|
| * mhm = mmol pro 100 g Styrol | | | | |

**Tab.3:**

| Triisobutylaluminium (TIBA) als Retarder | | | | |
|---|---|---|---|---|
| | Versuch 1 | Versuch 2 | Versuch 3 | Versuch 4 |
| TIBA [mhm] * | 0,9 | 0,95 | 0,95 | 0,97 |
| s―BuLi[mhm]* | 1 | 1 | 1 | 1 |
| Temp. [°C] | 150 | 165 | 180 | 200 |
| Zeit [h] | 1 | 0,8 | 0,4 | 0,2 |
| C_{[Li]} | 2 | 2 | 2 | 2 |

| | | | | |
|---|---|---|---|---|
| * mhm = mmol pro 100 g Styrol | | | | |

**Tab.4:**

| Tri-n-hexylaluminium (THA) als Retarder | | | | |
|---|---|---|---|---|
| | Versuch 1 | Versuch 2 | Versuch 3 | Versuch 4 |
| (THA) [mhm] * | 10 | 12 | 15 | 18 |
| (s―BuLi) [mhm] * | 1 | 1 | 1 | 1 |
| Temp. [°C] | 80 | 100 | 120 | 150 |
| Zeit [h] | 2 | 1,4 | 0,8 | 0,3 |
| C_{[Li]} | 1 | 1 | 1,5 | 2 |

| | | | | |
|---|---|---|---|---|
| * mhm = mmol pro 100 g Styrol | | | | |

**Tab.5:**

| Dibutylzink (DBZ) als Retarder | | | | |
|---|---|---|---|---|
| | Versuch 1 | Versuch 2 | Versuch 3 | Versuch 4 |
| (DBZ) [mhm] * | 11 | 14 | 17 | 20 |
| s―BuLi [mhm] * | 1 | 1 | 1 | 1 |
| Temp. [°C] | 80 | 100 | 130 | 150 |
| Zeit [h] | 1 | 1 | 1 | 1 |
| C_{[Li]} | 2 | 2,5 | 3 | 3 |

| | | | | |
|---|---|---|---|---|
| *mnm = mmol pro 100 g Styrol | | | | |

## Patentansprüche

1. Verfahren zur Herstellung von Polystyrol, Styrol - Bestadien - Block copolymerisation oder schlagzähen Polystyrol durch kontinuierlichen anionischen Polymerisation oder Copolymerisation von Styrol- oder Dienmonomeren mit Alkalimetallalkyl oder -aryl A als Polymerisationsauslöser, **dadurch gekennzeichnet, daß** die Polymerisation in Gegenwart eines Metallalkyls oder -aryls B der Formel R²ₙM² als Geschwindigkeitsregler vorgenommen wird, wobei
M²: ein n-wertiges Element der Gruppe 2a, oder 2b des Periodensystems, oder Aluminium und
R²: unabhängig voneinander Wasserstoff, Halogen, C₁-C₂₀-Alkyl oder C₆-C₂₀-Aryl
bedeuten, mit der Maßgabe, daß mindestens ein Rest R² C₁-C₂₀-Alkyl oder C₆-C₂₀-Aryl ist und wobei als Lösungsmittel Toluol, Cyclohexan, Methylcyclohexan, Hexan, Heptan, Ethylbenzol oder Dekalin eingesetzt werden und die anfängliche Monomerkonzentration mindestens 50 Gew.-% beträgt.

2. Verfahren nach Anspruch 1, **dadurch gekennzeichnet, daß** das Alkalimetallalkyl oder -aryl A und das Metallalkyl oder -aryl B in einem molaren Verhältnis von B zu A von 0,1:1 bis 500:1 verwendet wird.

3. Verfahren nach Anspruch 1, **dadurch gekennzeichnet, daß** ein Alkalimetallalkyl bzw. -aryl A der Formel R¹M¹, wobei
M¹: Li, Na oder K;
R¹: C₁-C₂₀-Alkyl oder C₆-C₂₀-Aryl oder
C₇-C₂₀-alkylsubstituiertes Aryl
bedeuten oder
eine bezogen auf M¹ äquivalente Menge eines initiatorfähigen niedermolekularen Umsetzungsprodukts A' der Formel R³(M¹)ₓ des Alkalimetallalkyls bzw. -aryls A verwendet wird, wobei
X eine ganze Zahl von 2 bis 5 bedeutet und
R³ den x-wertigen Rest eines aliphatischen, aromatisch-aliphatischen oder aromatischen Kohlenwasserstoffs darstellt.

4. Verfahren nach Anspruch 1, **dadurch gekennzeichnet, daß** der Initiator keine Lewisbase enthält.

5. Verfahren nach Anspruch 1, **dadurch gekennzeichnet, daß** ein Metallalkyl oder Metallarylhalogenid oder Metallalkyl oder Metallarylhydrid eingesetzt wird.

6. Verfahren nach Anspruch 1, **dadurch gekennzeichnet, daß** Styrol, α-Methylstyrol, p-Methylstyrol, 1,1-Diphenylethylen, Butadien oder Isopren oder deren Mischungen eingesetzt werden.

7. Verfahren nach Anspruch 1, **dadurch gekennzeichnet, daß** unter nicht-isothermen Bedingungen und im wesentlichen ohne Rückvermischung polymerisiert wird, wobei die am Reaktorausgang erreichte Temperatur mindestens 100°C beträgt.

8. Verfahren nach Anspruch 7, **dadurch gekennzeichnet, daß** die am Reaktorausgang erreichte Temperatur unter 250°C gehalten wird.

9. Verfahren nach Anspruch 7 oder 8, **dadurch gekennzeichnet, daß** die Umsetzung in einem Rohr- oder Rohrbündelreaktor vorgenommen wird.

10. Verfahren nach Anspruch 1, **dadurch gekennzeichnet, daß** die Polymerisation in einem rückvermischenden Reaktionsraum vorgenommen wird und gemeinsam mit oder getrennt von den Monomeren ständig frischer Polymerisationsauslöser und/oder Geschwindigkeitsregler zugeführt werden.

11. Verfahren nach Anspruch 10, **dadurch gekennzeichnet, daß** als rückvermischender Reaktionsraum ein Rührkessel eingesetzt wird.

12. Verfahren nach Anspruch 10, **dadurch gekennzeichnet, daß** als rückvermischender Reaktionsraum ein Umlaufreaktor eingesetzt wird.

13. Verfahren nach Anspruch 10, **dadurch gekennzeichnet, daß** zur Vervollständigung des Umsatzes dem rückvermischenden Reaktionsraum ein nicht rückvermischender Reaktionsraum als Nachreaktor zugeordnet ist.

14. Verfahren nach Anspruch 13, **dadurch gekennzeichnet, daß** die Polymerisation in dem rückvermischenden Reaktionsraum bis zu einem Umsatz von 20 bis 80 Gew.-% und in dem nicht rückvermischenden Reaktionsraum zu Ende geführt wird.

15. Verfahren nach Anspruch 13, **dadurch gekennzeichnet, daß** als nicht rückvermischender Reaktionsraum ein Rohrreaktor eingesetzt wird.

16. Verfahren nach Anspruch 15, **dadurch gekennzeichnet, daß** der Rohrreaktor keinen Wärmetauscher aufweist.

17. Verfahren nach einem der Ansprüche 10 bis 16, **dadurch gekennzeichnet, daß** die Umsetzung im rückvermischenden Reaktionsraum unter im wesentlichen isothermen Bedingungen bei einer Temperatur unter 200°C vorgenommen wird.

18. Verfahren nach einem der Ansprüche 10 bis 16, **dadurch gekennzeichnet, daß** die Umsetzung im rückvermischenden Reaktionsraum unter im wesentlich isothermen Bedingungen bei einer Temperatur unter 150°C vorgenommen wird.

19. Initiator für die anionische Polymerisation, enthaltend ein Metallalkyl oder -aryl A der Formel R¹M¹ und ein Metallalkyl oder -aryl B der Formel R²ₙM² in einem molaren Verhältnis von B zu A von 10:1 bis 100:1, wobei
M¹: Li, Na oder K;
R¹: C₁-C₂₀-Alkyl oder C₆-C₂₀-Aryl, C₇-C₂₀-alkylsubstituiertes Aryl;
M²: ein n-wertiges Element der Gruppe 2a, oder 2b des Periodensystems oder Aluminium und
R²: unabhängig voneinander Wasserstoff, Halogen, C₁-C₂₀-Alkyl oder C₆-C₂₀-Aryl
bedeuten, mit der Maßgabe, daß mindestens ein Rest R² C₁-C₂₀-Alkyl oder C₆-C₂₀-Aryl ist, **dadurch gekennzeichnet, daß** der Initiator keine Lewisbase enthält.

20. Initiator nach Anspruch 19, enthaltend anstelle des Metallalkyls oder -aryls A eine bezogen auf M¹ äquivalente Menge eines initiatorfähigen niedermolekularen Umsetzungsprodukts A' der Formel R³(M¹)ₓ des Alkalimetallalkyls bzw. -aryls A, wobei x eine ganze Zahl von 2 bis 5 bedeutet und R³ den x wertigen Rest eines aliphatischen, aromatisch-aliphatischen oder aromatischen Kohlenwasserstoffs darstellt.

21. Initiator nach Anspruch 19 oder 20, enthaltend als Metallalkyl oder -aryl B ein Erdalkalimetall, Zink oder Aluminiumalkyl bzw. -aryl mit Alkyl- bzw. Arylresten mit jeweils 1 bzw. 6 bis 10 C-Atomen.

22. Initiator nach Anspruch 21, enthaltend als Metallalkyl B: Dibutylmagnesium, Dibutylzink, Triisobutylaluminium oder Tri-n-hexylaluminium.

23. Lösung des Initators nach einem der Ansprüche 19 bis 22 in einem aliphatischen oder cycloaliphatischen Kohlenwasserstoff.

24. Styrolpolymere mit einem Restmonomerengehalt von weniger als 50 ppm, einem Gehalt an cyclischen Dimeren und Trimeren von weniger als 1000 ppm, einer Uneinheitlichkeit M_{W}/M_{N} von mehr als 1,5 und einem Schmelzflußindex MVI_{200°C/5kg} von mehr als 4 g/10 min, wie sie nach dem Verfahren des Anspruchs 11 erhalten werden.

## Claims

1. A process for the preparation of polystyrene, styrene-butadiene block copolymers or high-impact polystyrene by continuous anionic polymerization or copolymerization of styrene or diene monomers using an alkali metal alkyl or aryl compound A as polymerization initiator, which comprises carrying out the polymerization in the presence of an alkyl- or arylmetal compound B of the formula R²ₙM² as rate regulator, where
M² is an n-valent element from group 2a or 2b of the Periodic Table or aluminum; and
R² independently of one another are hydrogen, halogen, C₁-C₂₀-alkyl or C₆-C₂₀-aryl,
with the proviso that at least one radical R² is C₁-C₂₀-alkyl or C₆-C₂₀-aryl, and where the solvent used is toluene, cyclohexane, methylcyclohexane, hexane, heptane, ethylbenzene or decalin, and the initial monomer concentration is at least 50% by weight.

2. The process according to claim 1, wherein the alkali metal alkyl or aryl compound A and the alkyl- or arylmetal compound B are used in a molar ratio between B and A of from 0.1:1 to 500:1.

3. The process according to claim 1, wherein an alkali metal alkyl or aryl compound A of the formula R¹M¹, where
M1 is Li, Na or K;
R¹ is C₁-C₂₀-alkyl, C₆-C₂₀-aryl, or
C₇-C₂₀-alkyl-substituted aryl
or an equivalent amount, based on M¹, of an initiator-capable, low-molecular-weight product A' of the formula R³(M¹)ₓ of the reaction of the alkali metal alkyl or aryl compound A, where
X is an integer from 2 to 5, and
R³ is the x-valent radical of an aliphatic, aromatic-aliphatic or aromatic hydrocarbon.

4. The process according to claim 1, wherein the initiator comprises no Lewis base.

5. The process according to claim 1, wherein an alkyl- or arylmetal halide or alkyl- or arylmetal hydride is used.

6. The process according to claim 1, wherein styrene, α-methylstyrene, p-methylstyrene, 1,1-diphenylethylene, butadiene or isoprene, or a mixture thereof, is used.

7. The process according to claim 1, wherein the polymerization is carried out under non-isothermal conditions and essentially without back-mixing, the temperature reached at the reactor outlet being at least 100°C.

8. The process according to claim 7, wherein the temperature reached at the reactor outlet is kept below 250°C.

9. The process according to claim 7 or 8, wherein the reaction is carried out in a tubular or tube-bundle reactor.

10. The process according to claim 1, wherein the polymerization is carried out in a back-mixing reaction space, and fresh polymerization initiator and/or rate regulator is constantly supplied together with or separately from the monomer.

11. The process according to claim 10, wherein the back-mixing reaction space used is a stirred reactor.

12. The process according to claim 10, wherein the back-mixing reaction space used is a circulation reactor.

13. The process according to claim 10, wherein, in order to complete the conversion, a non-back-mixing reaction space is arranged downstream of the back-mixing reaction space.

14. The process according to claim 13, wherein the polymerization is continued to a conversion of from 20 to 80% by weight in the back-mixing reaction space and is completed in the non-back-mixing reaction space.

15. The process according to claim 13, wherein the non-back-mixing reaction space used is a tubular reactor.

16. The process according to claim 15, wherein the tubular reactor has no heat exchanger.

17. The process according to one of claims 10 to 16, wherein the reaction in the back-mixing reaction space is carried out under essentially isothermal conditions at a temperature below 200°C.

18. The process according to one of claims 10 to 16, wherein the reaction in the back-mixing reaction space is carried out under essentially isothermal conditions at a temperature below 150°C.

19. An initiator for anionic polymerization, comprising an alkyl- or arylmetal compound A of the formula R¹M¹ and an alkyl- or arylmetal compound B of the formula R²ₙM² in a molar ratio between B and A of from 10:1 to 100:1 is used, where
M¹ is Li, Na or K;
R¹ is C₁-C₂₀-alkyl, C₆-C₂₀-aryl, or C₇-C₂₀-alkyl-substituted aryl;
M² is an n-valent element from group 2a or 2b of the Periodic Tables or aluminum; and
R² independently of one another are hydrogen, halogen, C₁-C₂₀-alkyl or C₆-C₂₀-aryl
with the proviso that at least one radical R² is C₁-C₂₀-alkyl or C₆-C₂₀-aryl, wherein the initiator contains no Lewis base.

20. The initiator according to claim 19, wherein the alkyl- or arylmetal compound A is replaced by an equivalent amount, based on M¹, of an initiator-capable, low-molecular-weight product A' of the formula R³(M¹)ₓ of the reaction of the alkali metal alkyl or aryl compound A, where x is an integer from 2 to 5, and R³ is the x-valent radical of an aliphatic, aromatic-aliphatic or aromatic hydrocarbon.

21. The initiator according to claim 19 or 20, wherein the alkyl- or arylmetal compound B is an alkaline earth metal, zinc or aluminum alkyl or aryl compound containing alkyl or aryl radicals each having 1 or 6 to 10 carbon atoms respectively.

22. The initiator according to claim 21, wherein the alkylmetal compound B is dibutylmagnesium, dibutylzinc, triisobutylaluminum or tri-n-hexylaluminum.

23. A solution of the initiator according to one of claims 19 to 22 in an aliphatic or cycloaliphatic hydrocarbon.

24. A styrene polymer having a residual monomer content of less than 50 ppm, a cyclic dimer and trimer content of less than 1000 ppm, a nonuniformity M_{W}/M_{N} of greater than 1.5 and a melt volume index MVI_{200°C/5 kg} of greater than 4 g/10 min, as obtained by the process according to claim 11.

## Revendications

1. Procédé de préparation de polystyrène, de copolymères blocs de styrène-butadiène ou de polystyrène résistant aux chocs, par polymérisation ou copolymérisation anionique continue de monomères de styrène ou de diène avec, comme déclencheur de polymérisation, un métal alcalin alkylique ou arylique A, **caractérisé en ce que** la polymérisation est effectuée en présence d'un métal-alkyle ou d'un métal-aryle B de la formule R²ₙM², comme régulateur de vitesse,
M² représentant un élément n-valent du groupe 2a ou 2b du système périodique, ou de l'aluminium, et
R² représentant, indépendamment l'un de l'autre, de l'hydrogène, de l'halogène, un alkyle en C₁-C₂₀ ou un aryle en C₆-C₂₀,
à la condition qu'au moins un radical R² soit un alkyle en C₁-C₂₀ ou un aryle en C₆-C₂₀,
du toluène, du cyclohexane, du méthylcyclohexane, de l'hexane, de l'heptane, de l'éthylbenzène ou de la décaline étant mis en oeuvre, comme solvant, et la concentration initiale en monomères étant au moins de 50% en poids.

2. Procédé suivant la revendication 1, **caractérisé en ce que** le métal alcalin alkylique ou arylique A et le métal-alkyle ou métal-aryle B sont utilisés dans un rapport molaire entre B et A de 0,1/1 à 500/1.

3. Procédé suivant la revendication 1, **caractérisé en ce qu'**on utilise un métal alcalin alkylique ou arylique A de la formule R¹M¹, où
M¹ représente Li, Na ou K,
R¹ représente un alkyle en C₁-C₂₀ ou un aryle en C₆-C₂₀, ou un aryle substitué par de l'alkyle en C₇-C₂₀,
ou
une quantité équivalente en ce qui concerne M¹ d'un produit de réaction A' de faible poids moléculaire, susceptible de former un amorceur, qui répond à la formule R³(M¹)ₓ, du métal alcalin alkylique ou arylique A,
x représentant un nombre entier de 2 à 5, et
R³ représentant le radical de valence x d'un hydrocarbure aliphatique, aromatique-aliphatique ou aromatique.

4. Procédé suivant la revendication 1, **caractérisé en ce que** l'amorceur ne contient pas de base de Lewis.

5. Procédé suivant la revendication 1, **caractérisé en ce qu'**on met en oeuvre un halogénure de métal-alkyle ou de métal-aryle ou un anhydride de métal-alkyle ou de métal-aryle.

6. Procédé suivant la revendication 1, **caractérisé en ce qu'**on met en oeuvre du styrène, de l'α-méthylstyrène, du p-méthylstyrène, du 1,1-diphényléthylène, du butadiène ou de l'isoprène ou leurs mélanges.

7. Procédé suivant la revendication 1, **caractérisé en ce qu'**on effectue la polymérisation dans des conditions non isothermes et sensiblement sans remélange, la température atteinte à la sortie du réacteur étant au moins de 100°C.

8. Procédé suivant la revendication 7, **caractérisé en ce que** la température atteinte à la sortie du réacteur est maintenue en dessous de 250°C.

9. Procédé suivant l'une des revendications 7 et 8, **caractérisé en ce que** la réaction est effectuée dans un réacteur tubulaire ou à faisceau de tubes.

10. Procédé suivant la revendication 1, **caractérisé en ce que** la polymérisation est effectuée dans un espace réactionnel qui permet un remélange et **en ce que**, conjointement aux monomères ou séparément de ceux-ci, du déclencheur de polymérisation et/ou du régulateur de vitesse frais sont constamment alimentés.

11. Procédé suivant la revendication 10, **caractérisé en ce que**, comme espace réactionnel permettant un remélange, on met en oeuvre une cuve d'agitation.

12. Procédé suivant la revendication 10, **caractérisé en ce que**, comme espace réactionnel permettant un remélange, on met en oeuvre un réacteur de circulation.

13. Procédé suivant la revendication 10, **caractérisé en ce que**, pour parfaire la réaction, on adjoint à l'espace réactionnel permettant un remélange un espace réactionnel ne permettant pas de remélange, sous la forme d'un réacteur ultérieur.

14. Procédé suivant la revendication 13, **caractérisé en ce que** la polymérisation est conduite dans l'espace réactionnel permettant un remélange jusqu'à un degré de transformation de 20 à 80% en poids et dans l'espace réactionnel ne permettant pas de remélange jusqu'à la fin.

15. Procédé suivant la revendication 13, **caractérisé en ce que**, comme espace réactionnel ne permettant pas de remélange, on met en oeuvre un réacteur tubulaire.

16. Procédé suivant la revendication 15, **caractérisé en ce que** le réacteur tubulaire ne présente pas d'échangeur de chaleur.

17. Procédé suivant l'une des revendications 10 à 16, **caractérisé en ce que** la réaction dans l'espace réactionnel permettant un remélange est effectuée dans des conditions sensiblement isothermes, à une température inférieure à 200°C.

18. Procédé suivant l'une des revendications 10 à 16, **caractérisé en ce que** la réaction dans l'espace réactionnel permettant un remélange est effectuée dans des conditions sensiblement isothermes, à une température inférieure à 150°C.

19. Agent d'amorçage pour la polymérisation anionique, contenant un métal-alkyle ou métal-aryle A de la formule R¹M¹ et un métal-alkyle ou métal-aryle B de la formule R²ₙM² dans un rapport molaire entre B et A de 10/1 à 100/1,
M¹ représentant Li, Na ou K,
R¹ représentant un alkyle en C₁-C₂₀ ou un aryle en C₆-C₂₀, ou un aryle substitué par de l'alkyle en C₇-C₂₀,
M² représentant un élément n-valent du groupe 2a ou 2b du système périodique, ou de l'aluminium, et
R² représentant, indépendamment l'un de l'autre, de l'hydrogène, de l'halogène, un alkyle en C₁-C₂₀ ou un aryle en C₆-C₂₀,
à la condition qu'au moins un radical R² soit un alkyle en C₁-C₂₀ ou un aryle en C₆-C₂₀,
**caractérisé en ce que** l'agent d'amorçage ne contient pas de base de Lewis.

20. Agent d'amorçage suivant la revendication 19, contenant, au lieu du métal-alkyle ou du métal-aryle A, une quantité équivalente en ce qui concerne M¹ d'un produit de réaction A' de faible poids moléculaire, susceptible de former un agent d'amorçage, qui répond à la formule R³(M¹)x, du métal alcalin alkylique ou arylique A, x représentant un nombre entier de 2 à 5 et R³ représentant le radical à x valence d'un hydrocarbure aliphatique, aromatique-aliphatique ou aromatique.

21. Agent d'amorçage suivant l'une des revendications 19 et 20, contenant, comme métal-alkyle ou métal-aryle B, un métal alcalino-terreux, du zinc ou de l'aluminium alkylique ou arylique avec des radicaux alkyle ou aryle comportant chacun 1 à 10 atomes de C ou respectivement 6 à 10 atomes de C.

22. Agent d'amorçage suivant la revendication 21, contenant, comme métal-alkyle B, du dibutyl-magnésium, du dibutyl-zinc, du triisobutyl-aluminium ou du tri-n-hexyl-aluminium.

23. Solution de l'agent d'amorçage suivant l'une des revendications 19 à 22, dans un hydrocarbure aliphatique ou cycloaliphatique.

24. Polymère de styrène présentant une teneur en monomères résiduaires inférieure à 50 ppm, une teneur en trimères et dimères cyliques inférieure à 1000 ppm, une hétérogénéité M_{W}/M_{N} de plus de 1,5 et un indice de fusion MVI_{200°C/5 kg} de plus de 4 g/10 minutes, tels qu'obtenus selon le procédé de la revendication 10.
